Europäisches Patentamt

European Patent Office

Office européen des brevets

(11) Veröffentlichungsnummer: **0 249 016**
**A2**

## EUROPÄISCHE PATENTANMELDUNG

(21) Anmeldenummer: **87105904.4**

(51) Int. Cl.4: **F03G 7/04**

(22) Anmeldetag: **22.04.87**

(30) Priorität: **13.06.86 DE 3619889**
**08.08.86 DE 3626859**

(43) Veröffentlichungstag der Anmeldung:
**16.12.87 Patentblatt 87/51**

(84) Benannte Vertragsstaaten:
**CH DE FR GB IT LI SE**

(71) Anmelder: **Hingerl, Dieter**
**Westendstrasse 74**
**D-8000 München 2(DE)**

(72) Erfinder: **Hingerl, Dieter**
**Westendstrasse 74**
**D-8000 München 2(DE)**

(74) Vertreter: **Strasse, Joachim, Dipl.-Ing. et al**
**Strasse und Stoffregen European Patent**
**Attorneys Zweibrückenstrasse 17**
**D-8000 München 2(DE)**

(54) **Verfahren zur Erzeugung von Energie.**

(57) Nicht das subjektive Temperaturempfinden des Menschen, sondern der physikalische Nullpunkt entschiedet über die Energieabläufe in der Natur. Wird in Richtung des physikalischen Nullpunktes ein Gefälle vorgegeben, so kann über dieses Gefälle implodiert werden, wobei das untere Gefälleniveau dann bestehen bleibt, wenn das Arbeitsmedium entspannt und sein Träger entfernt wird. Für die Entspannung ist der Widerstand des Verbrauchers maßgebend. Beim Prozess entsteht eine Kälteleistung, die vielseitig verwendbar ist.

Fig.1

EP 0 249 016 A2

## Verfahren zur Erzeugung von Energie

Die vorliegende Erfindung betrifft ein Verfahren zur Erzeugung von Energie unter Verwendung der Implosionskraft.

Die Versorgung der Weltbevölkerung mit Energie auf der Grundlage von konventionellen Energieträgern, wie beispielsweise Erdöl, Erdgas und Kohle, aber auch Kernenergie, ist in der Zukunft nicht mehr gesichert. Ersatzlösungen, wie beispielsweise die Nutzbarmachung der Fusion von Wasserstoff zur Energiegewinnung, sind in absehbarer Zeit nicht realisierbar.

Es besteht daher die Aufgabe, ein Verfahren zur Erzeugung von Energie verfügbar zu machen, dessen Arbeitsmedium in unbeschränkten Maße zur Verfügung steht.

Die Lösung dieser Aufgabe ergibt sich aus dem Patentanspruch 1. In den sich anschließenden Unteransprüchen sind bevorzugte Ausführungsformen des Verfahrens angegeben.

Das Verfahren basisert aus dem in der Natur vorkommenden Implosionsprozess. Das "Konstruktionsmuster" der Natur besteht nicht aus euklidschen Formen. Natürliche Bewegungen verlaufen nicht zentrifugal (Explosions prinzip), sondern zentripedal (Implosionsprinzip). Als Beispiel sind Wasser-und Luftwirbel, Spiralnebel und so weiter anzuführen.

Albert Einstein schloß daraus, daß auch die energetischen Prozesse in der Natur von nichteuklidscher Beschaffenheit sind.

Demnach müßte es möglich sein, zur Lösung der Energiefrage einen Implosionsprozess zu kopieren.

Zunächst ist der Gegensatz von Implosion und Explosion genauer zu umreißen. Die Formulierung, daß sich eine Implosion von außen nach innen - und eine Explosion von innen nach außen bewegt, ist arg dürftig.

Aufschlußreicher wäre die Information, daß bei einer dauerhaften Implosion Energie abgenommen, bei einer Explosion Energie zugeführt werden muß.

Jeder Energieprozess benötigt ein Potentialgefälle, welches beim Prozess immer von oben nach unten durchlaufen wird. Demnach besteht ein Potentialgefälle aus einem oberen und einem unteren Niveau.

Beim Explosionsprozess ist das untere Niveau in Form der Umgebungsverhältnisse gegeben. Das obere Niveau fehlt. Es muß durch Verbrennen eines nicht regenerierbaren Energieträgers errichtet werden. Erst dann kann man von oben nach unten entspannen und die eingesetzte Energie abnehmen. Der Wirkungsgrad eines Explosionsprozesses ist nur dann günstig, wenn beim Entspannen möglichst viel Energie abgenommen wird. Wo das nicht möglich ist, muß das untere Niveau durch Zusatzeinrichtungen, z.B. Kühler, aufrechterhalten werden.

Der Implosionsprozess verhält sich ähnlich wie der Explosionsprozess. Er unterschiedet sich nur dadurch, daß nicht das obere, sondern das untere Niveau errichtete werden muß. Es fehlt also das untere Niveau. Das Errichten und Aufrechterhalten des unteren Niveaus kann nicht mit dem Arbeitsaufwand verglichen werden, der für die Aufrechterhaltung des oberen Niveaus erforderlich ist.

Ein unteres Niveau braucht beim Implosionsprozess nur einmalig als Start-oder "Zündleistung" in Form eines Vakumms vorgegeben werden. Wird nun Luft als Gasgemenge oder ein aus der Luft abgetrenntes Gas, welches durch Umgebungstemperatur aufgeheizt ist, auf das untere Niveau bis zur Phasenumwandlung entspannt, dann kommt dort nur noch Gaskondensat ohne Eigen-oder Vergasungstemperatur an. Um das untere Niveau aufrechtzuerhalten, genügt es, das Kondensat aus dem Vakuum zu entfernen. Der Aufwand für diese Arbeit benötigt je nach Verfahren, z.B. hydrostatische Vakuumentlastung null Prozent, Vakuumentlastungsvorrichtung zwei bis drei Prozent, Kondensatpumpenentlastung zehn bis fünfzehn Prozent. Das Entlasten eines unteren Niveaus ist auch bei Explosionsprozessen erforderlich, z.B. beim Dampfkraft-Arbeitskreis. Bei modernen Dampfkraft-Arbeitskreisen wird in ein Hochvakuum entspannt, welches durch Entluften und Kondensieren angelegt wurde. Anschließend wird das Kondensat aus dem Hochvakuum in den Überdruckbereich des Arbeitskreises zurückgespeist, wobei Druckunterschiede von 0,05 Bar auf 30 bar zu überwinden sind. Das Entlasten eines unteren Niveaus, auch dann, wenn es im Hockvakuumbereich liegt, ist möglich und vertretbar. Die Energiebilanz ergibt dann, allgemein gesehen, immer noch einen erheblichen Vorteil.

Bei der vorliegenden Erfindung wird die Arbeitsleistung der Luft ausgenutzt.

Zur Erläuterung des zur Verfügung stehenden Potentials kann folgendes angeführt werden:

Wir leben am Grund eines Luftmeeres, welches vom physikalischen Nullpunkt aus betrachtet, aus Heißgas besteht. 0°C sind 273K, also 273 Plus-Grade, die auch als brüllende Hitze betrachtet werden können.

Bei geringfügig erscheinenden Temperaturunterschieden in der Atmosphäre lösen sich Wind, Sturm oder Orkan aus. nach der Beaufort-Skala entspricht ein Orkan mit schwerer, zerstörerischer Wirkung der Windstärke 12. Dabei treten Windgeschwindigkeiten bis 37 m/s auf, welche im Gegensatz zur Geschwindigkeit implodierender Luft als träge zu bezeichnen sind. Implodiert Luft in ein Vakuum, dann erreicht sie eine 13 fache Orkangeschwindigkeit.

Die Kraft der Luft besteht nicht nur aus ihrem Gewicht, welches im wesentlichen den Atmosphärendurck bestimmt und als potentielle Energie zu betrachten ist. Wesentlicher ist ihre innere Energie, ihre Wärmespannung. Diese steigt mit zunehmender Temperatur, wobei sich der Luftdruck nur geringfügig verändert. So erreicht Luft, wenn sie in ein Vakuum austritt, bei einem Atmosphärendruck von 1 bar und 0°C bereits 500m/s. Die Austrittgeschwindigkeit der Luft ist ihre mittlere Molekulgeschwindigkeit, die sich aus ihrem Gwicht (80% Stickstoff, 20% Sauerstoff) und ihrer Temperatur errechnet.

Wird ein aus der Luft abgetrenntes Gas in einem geschlossenen Arbeitskreis gehalten und mit Umgebungstemperatur aufgeheizt, dann erreicht z.B. Stickstoff mit - 147°C(kritischer Punkt) einen Druck von 35 bar, Sauerstoff mit - 119°C 51 bar.

Weil die Umgebungstemperatur weit über dem kritischen Punkt der betreffenden Gase liegt, können diese in einem geschlossenen Arbeitskreis mühelos auch auf eine Temperatur über dem kritischen Punkt aufgeheizt werden, wodurch sich der Wirkungsgrad des Verfahrens entsprechend erhöht. Geschlossene Arbeitskreise können, wenn sie mit einer Vakuumentlastungsvorrichtung ausgerüstet sind, bei vergleichbarem Volumen die Leistung von Verbrennungsmotoren um mehrfaches übertreffen.

Der thermische Energiehaushalt der Atmosphäre besteht aus Sonneneinstrahlung. Die Sonne liefert täglich eine Energiezufuhr von 1725 [14] kw h, wovon 15% durch die Atmosphäre und 43% von der Erde absorbiert werden.

Für die Implosionskraft bedeutet das, daß z.B. 1kg Stickstoff mit 0°C 400kJ beinhaltet. Darüberhinaus ist die Atmosphäre auch Träger eines elektrischen Feldes, welches in Erdnähe den Mittelwert von 130 Vm besitzt.

Durch Implodieren kann sowohl die thermische, wie auch die elektrische Energie der Atmosphäre genutzt werden. Beim Implodieren verlieren Luftgase im wesentlichen ihre Wärmeleitfähigkeit. Das bedeutet, daß der Implosionsprozess durch Umgebungstemperatur nicht behindert wird, zumal die Implosionsanlage sehr schnell Eis ansetzt und sich selbst isoliert. Mit Abnahme der Wärmeleitfähigkeit nimmt die magnetische Suszibilität der Gase zu und erreicht nach der Phasenumwandlung ihren höchsten Wert.

Für den Prozess ist es erstrebenswert, aber nicht Voraussetzung, über ein möglichst hohes Vakuum zu verfügen.

Das Vakuum soll den Tripel-oder Erstarrungspunkt für das zum Einsatz kommende Luftgas enthalten. Dann verfügt der Prozess über ein optimales Gefälle und bringt eine maximale Leistung. Der Tripelpunkt soll aber nicht überschritten werden, weil sonst eine Sublimation eintritt. Um die mengenmäßig wichtigsten Gase aus der Luft zu verflüssigen (78% Stickstoff, 21% Sauerstoff) sind -210°C erforderlich. Das entspricht einem Vakuum von 80%. Ein solches Vakuum zu erstellen, ist kein Problem. Aufwendig und komliziert werden Vakua erst über 90%. Auf jeden Fall muß das impodierende Gas phasenumgewandelt werden. Nur dann ist eine wirtschaftliche Entlastung des Vakuums möglich. Würde nicht phasenumgewandelt, dann wäre das Vakuum sofort aufgehoben. Der Prozess könnte nicht funktionieren.

Weitere Einzelheiten, Merkmale und Vorteile der vorliegenden Erfindung sind der folgenden Beschreibung von Ausführungsbeispielen zu entnehmen.

Es zeigen:

Figur 1: eine vereinfachte Prinzipdarstellung für eine offene Kraft-und Luftzerlegungsanlage mit hydrostatischer Vakuumentlastung gemäß einem ersten Ausführungsbeispiel der Erfindung,

Figur 2: eine weitere Ausgestaltung der offenen Kraft-und Luftzerlegungsanlage mit hydrostatischer Vakuumentlastung gemäß Figur 1,

Figur 3: das Ausführungsbeispiel gemäß Figur 1 unter Einbeziehung einer Kondensatpumpe,

Figur 4: eine weitere Modifikation des Ausführungsbeispiels nach Figur 1,

Figure 5: eine vereinfachte Prinzipdarstellung für eine geschlossene Kraft-und Luftzerlegungsanlage mit Vakuumentlastungsvorrichtung gemäß einem zweiten Ausführungsbeispiel der Erfindung,

Figur 6: eine erste Modifikation des Ausführungsbeispiels nach Figur 5,

Figur 7: eine zweite Modifikation des Ausführungsbeispiels nach Figur 5 und

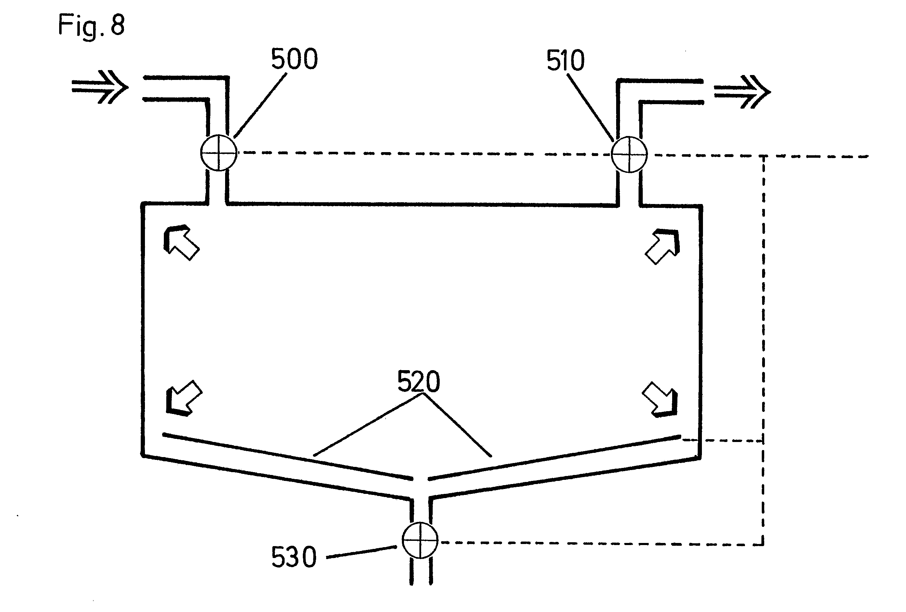

Figur 8: das Prinzipbild einer Luftentfeuchtungsanlage, die den erfindungsgemäßen Ausführungsbeispielen vorgeschaltet ist.

Ausführungsbeispiel 1

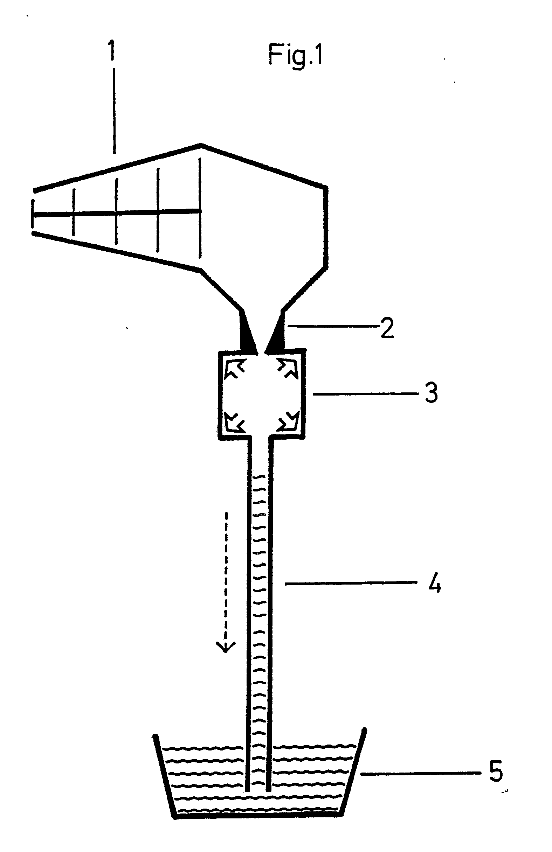

Die Figur 1 zeigt das Grundprinzip für eine vereinfachte Ausführung einer offenen Luftverflüssigungsanlage mit hydrostatischer Vakuumentlastung.

Die Anlage ist vom atmosphärischen Druck umgeben. In ihr besteht ein Vakuum. Über den mit Kondensat aufgefüllten Behälters 5 stellt sich durch Einwirkung des Atmosphärendruckes der Flüssigkeitspegel in der hydrostatischen Drucksäule ein. Die Drucksäule bewirkt dann ein 100%iges Kompensativ zwischen Atmosphärendruck und Vakuum.

Der Bremswiderstand der Entspannungs-und Kraftmaschine 1 ist geringer als der Luftdruck, der Arbeit gegen den Widerstand leistet und dadurch zum Strömen kommt. Um die Entspannungsmaschine baut sich eine Strömungszone auf, die mit zunehmender Entfernung von der Maschine immer schwächer wird und sich dann in der stehenden Luft verläuft. Das Zentrum der Strömungszone befindet sich im Eingang zur Entspannungsmaschine. Hier erreicht sie ihre maximale Mol.-Geschwindigkeit.

Die Entspannungs-und Kraftmaschine 1 wird bei 0°C Umgebungstemperatur mit 1 bar und 485 m/s durch entfeuchtete Luft beaufschlagt. Die Luft leistet Arbeit und entspannt bis an den Nassbereich. Über das Drosselventil 2, welches von der noch gasförmigen Luft durchdrungen wird, tritt eine Phasenumwandlung ein. Die jetzt verflüssigte Luft durchfällt mit geodätischem Gefälle den Vakuumbehälter 3, welcher das untere Niveau des Potentialgefälle darstellt. Die das Vakuum durch fallende Luft verfügt über fast keine Wärmeleitfähigkeit. Ebenso das Vakuum. Es ist deswegen ausgeschlossen, daß sie in der kurzen Zeit, in welcher sie sich im Unterdruckbereich befindet, Eigentemperatur aufnimmt und wiedervergast. Das das Vakuum durchfallende Kondensat trifft auf die hydrostatische Drucksäule. Diese steht im Gleichgewicht zum Atmosphärendruck (stehende Luft). Das Kondensat bewirkt an der Oberseite der Drucksäule 4 ein Übergewicht. Das Übergewicht läuft unten von der Säule ab. Das Kondensat ist somit durch seine eigene hydrostatische Leistung in Verbindung des geodätischen Gefälles der Drucksäule aus dem Unterdruckbereich gegen den atmosphärischen Überdruck herausgenommen. Vorausgesetzt, daß der Auffangbehälter zur Drucksäule von stehender Luft umgeben ist, ergeben sich für Sauerstoff und Stickstoff eine Säulenhöhe von 6m, für Argon 4,70m für Xenon 1,60m.

Damit der Auffangbehälter immer im Windschatten steht, ist es zweckmäßig, ihn mit einem Windfang zu umgeben.

Die hydrostatische Entlastung des Vakuums stellt somit einen eigenständigen Prozess dar, der den Wirkungsgrad der Kraftanlage in keiner Weise schmälert.

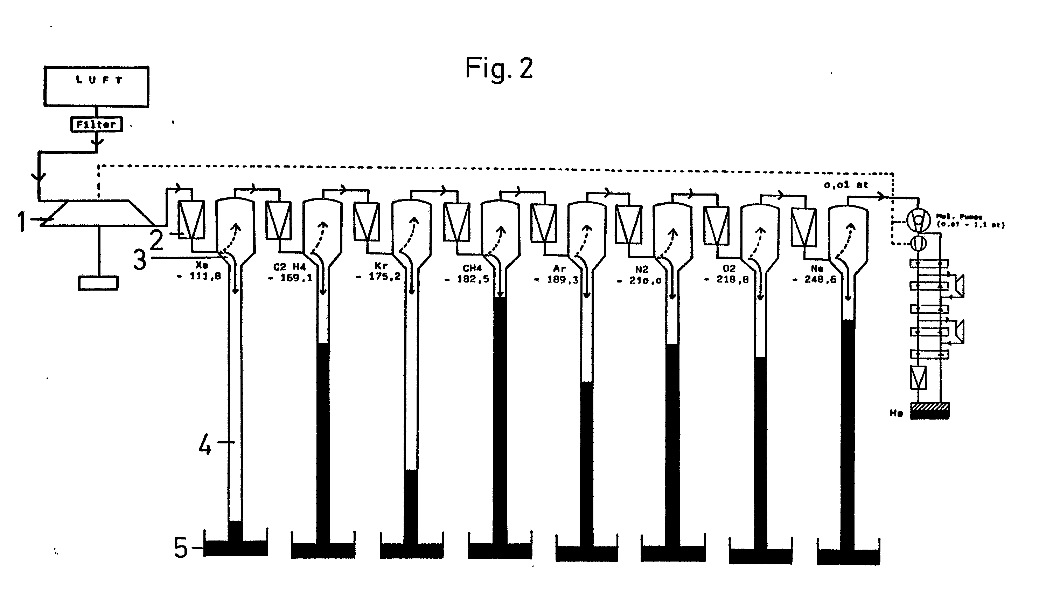

Figur 2 zeigt eine Möglichkeit, das Prinzip zur Luftzerlegungsanlage auszubauen. Die Temperaturangaben entsprechen dem Tripelpunkt des entsprechenden Gases, der nur annähernd erforderlich ist.

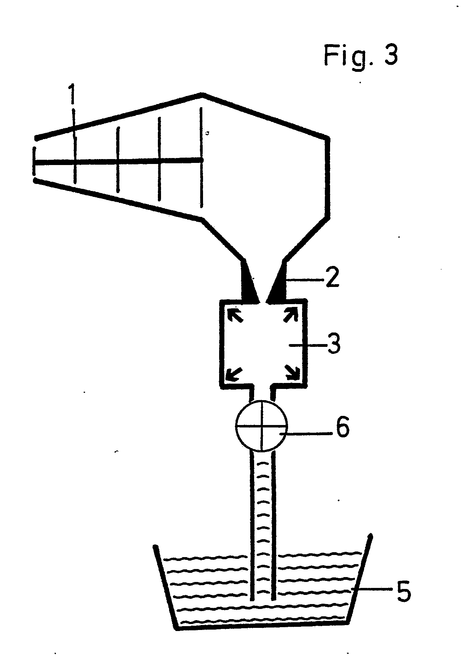

Bei der Darstellung der Figur 3 wird das Grundprinzip mit einer Kondensatpumpe 6 anstelle der hydrostatischen Drucksäule 4 gezeigt. Der Einsatz einer Kondensatpumpe 6 wäre die einfachste Lösung. Ihre Antriebsleistung müßte allerdings vom Kraftgewinn der Anlage abgezweigt werden. Außerdem sind derzeit keine geeigneten Materialien bekannt, mit denen eine entsprechende, hochverdichtete Pumpe für den betreffenden Temperaturbereich problemlos gebaut werden könnte.

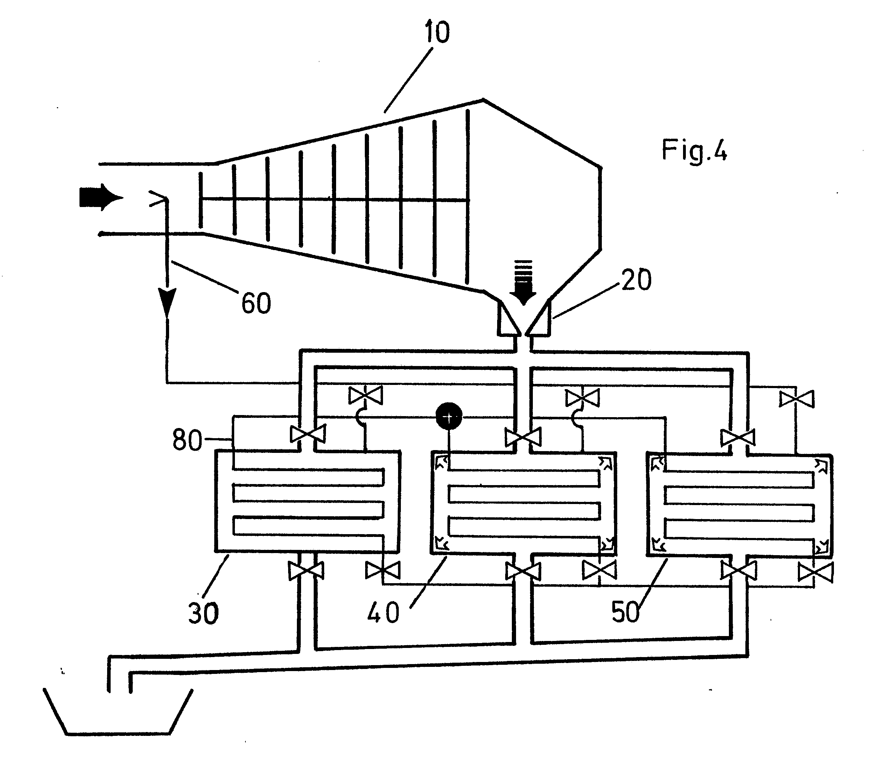

Figur 4 zeigt das Grundprinzip mit einer Vakuumentlastungsvorrichtung (30, 40, 50). Die Funktionsweise ist im Ausführungsbeispiel 2 erklärt.

Die betreffenden Anlagen müssen mit getrockneter, staubfreier Luft betrieben werden.

Der wesentliche Vorteil offener Implosionsanlagen besteht in der Funktion als Luftverflüssigungsanlage, wobei mit ihr auch Giftgase z.B. aus Sondermüllverbrennungsprozessen abgefangen werden können, wobei Energie gewonnen wird.

Ausführungsbeispiel 2 für geschlossene Kraft- und Kälteanlagen.

Bei geschlossenen Arbeitskreisen wird im Gegensatz zur offenen Anlage nur ein aus der Luft abgetrenntes Gas im Umlauf gehalten. Seine Arbeitsenergie bezieht der Kreis aus der Umgebungstemperatur durch Vorschalten eines Gebläses oder eines Verdichters. Wenn der Kreis mit dem Arbeitsmedium Stickstoff arbeitet und durch Umgebungstemperatur aus -100° C aufgeheizt wird, dann erreicht er einen Druck von 50 bar bei 400m/s = 20 000 Ws; durch Vorschalten eines Turbo-Luftverdichters etwa 60 000 Ws als Eingangsleistung. Der Kreis kann anstelle der Entspannungsmaschine mit einem MHD-Generatorsystem ausgerüstete werden. Die Entspannung des Gases erfolgt dann durch ein Magnetfeld. Mit seiner Kälteleistung ermöglicht der Kreis den Einsatz von supraleitenden Linearmotoren.

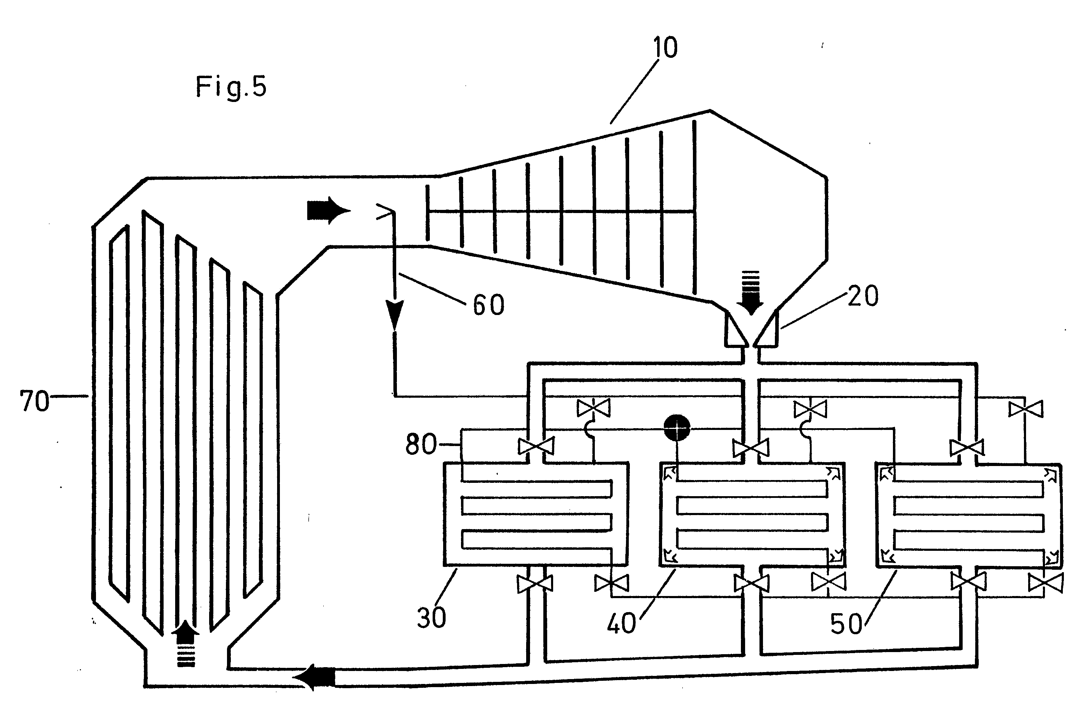

Figur 5 zeigt einen geschlossenen Arbeitskreis mit Vakuumsentlastungsvorrichtung.

Im Behälter 30 befindet sich Gaskondensat. Die Anlage ist evakuiert. Über ein geringes, geodätisches Gefälle fließt das Kondensat zum Wärmetauscher 70. Es nimmt dabei Vergasungstemperatur an und steigt gasförmig in den Wärmetauscher 70, wo es sich auf Umgebungstemperatur aufwärmt. Es beschlägt die Kraft-und Entspannungsmaschine 10 und verflüssigt über das Drosselventil 20. Eine Druckausgleichsleitung 60 sorgt dafür, daß das Kondensat aus dem Behälter 30 auch tatsächlich ablaufen kann.

Das Kondensat fließt vom Drosselventil 20 über geodätisches Gefälle in den Vakuumbehälter 40 und füllt diesen auf. Der Behälter 30 hat sich entleert. Er steht jetzt unter Gasdruck. Behälter 40 ist mit Kondensat gefüllt. In 50 befindet sich ein Vakuum. Der Kreislauf setzt sich jetzt von 40 nach 50 fort. Gleichzeitig kondensiert 40 mit seiner Kälteleistung über den Arbeitskreis 80 den Inhalt des Behälters 30, wodurch sich in ihm das Vakuum erneut einstellt.

Es wird also immer der Inhalt eines Behälters kondensiert, während die anderen zwei in Funktion sind.

Der Arbeitsaufwand für die Umwälzpumpe, die nicht besonders verdichtet sein muß, ist im Vergleich zur Leistung der Entspannungs-und Kraftmaschine geringfügig.

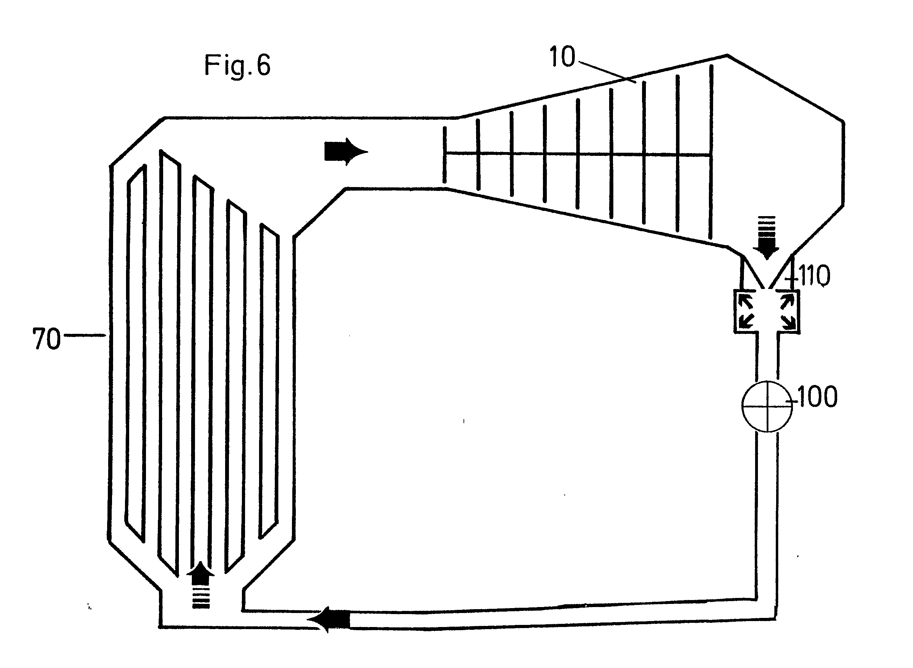

Die Figur 6 zeigt einen geschlossenen Arbeitskreis mit Kondensatpumpe 100 zur Entlastung des Vakuums. Der Arbeitskreis verhält sich wie eine herkömmlicher Dampfkraft-Arbeitskreis. An Stelle des Kondensators tritt ein Drosselventil 110.

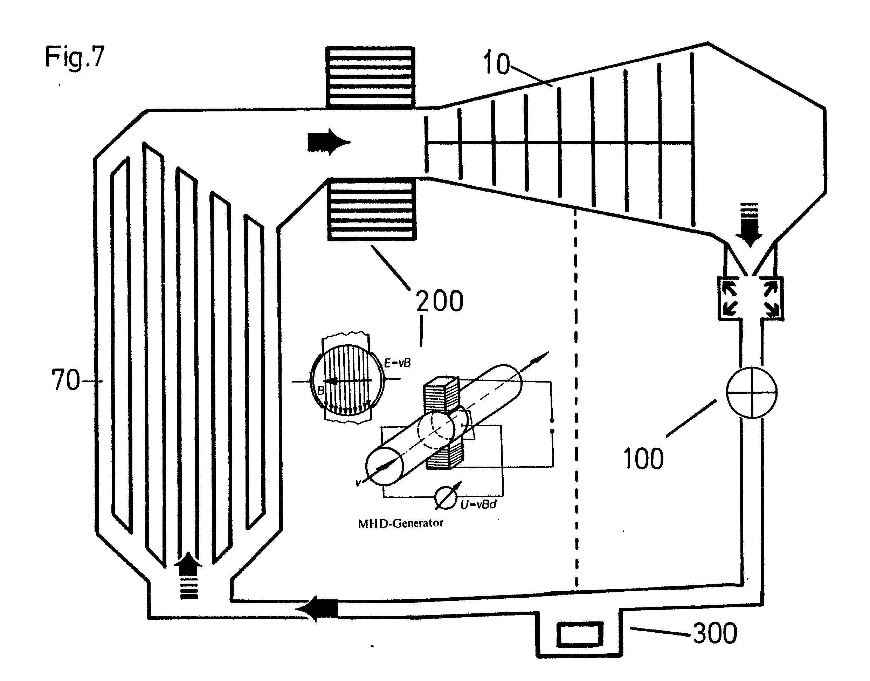

Der Arbeitskreis kann wahlweise mit Entspannungsmaschine, kombiniert mit Entspannungsmaschine 10 oder gemäß Figur 7 mit einem MHD-Generator 200 oder auch nur mit einem MHD-Generator 200 ausgerüstet werden.

Wird der Arbeitskreis mit einer Entspannungsmaschine 10 ausgerüstet, die wesentlich leichter ist als eine MHD-Entspannung, dann kann seine mechanische Arbeitsleistung mit einem Unipolar-Generator gewandelt werden, wenn elektrische Energie gewünscht wird. Die Kälteleistung des Arbeitskreises läßt auch supraleitende Linearmotoren zu.

Sowohl offene wie geschlossene Implosionskraftanlagen benötigen für ihre Funktion entfeuchtete Luft.

Luft zu entfeuchten ist eine Frage des Aufwandes.

Die Methode soll billig und zuverlässig sein. Die bisherigen Methoden, Luft zu entfeuchten, haben Vor-und Nachteile. Insbesondere erscheinen sie für die Verwendung in mobilen Anlagen ungeeignet. So ergeben sich zum Beispiel bei der Verwendung von Ätzkalifiltern ein hoher Wartungsaufwand und Entsorgungsprobleme.

Diese Nachteile sind bei der folgend beschriebenen Luftentfeuchtungsanlage nicht erkennbar.

Diese besteht aus einem Behälter, in dem sich ein Vakuum befindet. Das Vakuum entspricht einer Temperatur, bei der die in der Luft enthaltene Feuchtigkeit schlagartig auskristallisiert. Das Vakuum muß als Startleistung vorgegeben werden. Der Eingang 500 und der Ausgang 510 des Vakuumbehälters ist durch jeweils eine Pumpe abgeschlossen. Die Pumpen sind aneinander gekoppelt. In das Vakuum eindringende Luft treibt somit über die Pumpe 500 und eine Kupplung die Ausgangspumpe 510 an. Es dringt immer nur soviel Luft in das Vakuum, wie gleichzeitig herausgepumpt wird. Die Ausgangspumpe 510 benötigt allerdings einen geringen Anteil an Zusatzenergie. Die von der Eingangspumpe 500 über die Kupplung gelieferte Kraft würde nicht ausreichen, ein Gleichgewicht zu unterhalten.

Im Vakuum kristallisiert die Feuchtigkeit der zum Durchsatz kommenden Luft aus. Die Eiskriatalle setzen sich am Boden auf einer Abtaufläche 520 ab und werden verflüssigt. Eine Kondensatpumpe 530 entnimmt die Flüssigkeit aus dem Vakuum.

Die von der Ausgangspumpe 510 aus dem Vakuum geförderte Luft wird verdichtet ausgestoßen. Sie besitzt dann Umgebungstemperatur.

## Ansprüche

1. Verfahren zur Erzeugung von Energie, **dadurch gekennzeichnet**, daß Luft aus der Umgebung über einen Generator (1) in ein Vakuum (3) derart entspannt wird, daß sie in einer dem Vakuum vorgeschalteten Drossel (2, 20, 110) verflüssigt wird, so daß sie in flüssiger Phase das Vakuum (3) durchfällt und sich in einem dem Vakuum (3) nachgeschalteten Fallrohr (4) sammelt, um zusammen mit in einem Behälter (5) befindlicher Luft einen Abschluß gegenüber der Atmosphäre zu bilden.

2. Verfahren nach Anspruch 1, **dadurch gekennzeichnet**, daß es für jede Komponente der Luft in einer Hintereinanderschaltung nacheinander durchgeführt wird, wobei zuerst der am leichtesten zu kondensierende Bestandteil verflüssigt wird und zuletzt der am schwersten zu kondensierende Bestandteil.

3. Verfahren nach Anspruch 1, **dadurch gekennzeichnet**, daß die verflüssigte Luft mittels eine Kondensatpunpe (6) aus dem Vakuum (3) abgepumpt wird.

4. Verfahren nach Anspruch 1, **dadurch gekennzeichnet**, daß die Luft noch Verflüssigung in der Drossel (2, 20, 110) zyklisch in einen Behälter (30, 40, 50) gefüllt wird, während ein anderer Behälter (30, 40, 50) von verflüssigter Luft entleert wird und ein dritter Behälter (30, 40, 50) unter Vakuum steht, nach Entleerung des einen Behälters (30, 40, 50), dieser mit dem inzwischen mit verflüssigter Luft gefüllten Behälter (30, 40, 50) kurzgeschlossen wird, um den entleerten und unter Umgebungsdruck stehenden Behälter (30, 40, 50) zu evakuieren, und gleichzeitig damit begonnen wird, den unter Vakuum stehenden Behälter (30, 40, 50) mit verflüssigter Luft zu füllen.

5. Verfahren nach einem der Ansprüche 1 bis 4, **dadurch gekennzeichnet**, daß es in einem geschlossenen Kreislauf durchgeführt wird.

6. Verfahren nach Anspruch 5,
**dadurch gekennzeichnet**, daß das Kondensat nach Überführung in die Gasphase und vor Entspannung über den Generator (10) über einen Wärmetaucher (70) geleitet wird.

7. Verfahren nach einem oder mehreren der vorangehenden Ansprüche,
**dadurch gekennzeichnet** , daß die sich entspannende Luft vor Eintritt in den Generator (10) über einen MHD-Generator (200) geleitet wird.

8. Verfahren nach einem oder mehreren der vorangehenden Ansprüche,
**dadurch gekennzeichnet**, daß umgebungsfeuchte Luft vor Eintritt in den Energiegewinnungskreislauf über eine Eingangspumpe (500) in ein derartiges Vakuum eingeleitet wird, welches die in der Luft vorhandene Feuchtigkeit großteils in Eiskristalle überführt, so daß die getrockene Luft über eine Ausgangspumpe (510) in den Energiegewinnungskreislauf gespeist werden kann.

9. Verfahren nach Anspruch 8,
**dadurch gekennzeichnet**, daß die Eiskristalle auf einer Abtaufläche (570) gesammelt werden, in Kondensat überführt werden und über eine Kondensatpunpe (530) abgezogen werden.

10. Verfahren nach Anspruch 8 und/oder 9,
**dadurch gekennzeichnet**, daß alle Pumpen (500, 510, 530) energetisch miteinander gekoppelt sind.

Fig.1

# Fig. 2

Fig. 3

Fig.4

10

20

60

80

30

40

50

0 249 016

15402

Fig.5

10

70

60

20

80

30

40

50

0 249 016

15402

Fig.6

70

10

110

100

154 02

0 249 016

Fig.7

MHD-Generator

$E = vB$

$U = vBd$

$B$

$v$

10

100

200

300

70

15402

Fig. 8

500
510
520
530